# FASCICULE DE BREVET EUROPEEN

(11) **EP 3 318 435 B1**
(45) Date de publication et mention de la délivrance du brevet: **12.12.2018**
(21) Numéro de dépôt: 17190123.4
(22) Date de dépôt: 08.09.2017
(51) Int. Cl.: B60J 1/14, B60J 10/70, B64C 1/14

(54) **STRUCTURE TRANSPARENTE POUR FENETRE ET AERONEF**
TRANSPARENTE STRUKTUR FÜR FENSTER, UND LUFTFAHRZEUG
TRANSPARENT STRUCTURE FOR WINDOW AND AIRCRAFT

(30) Priorité: 12.10.2016 FR 1601482
(43) Date de publication de la demande: 09.05.2018
(73) Titulaire: Airbus Helicopters, 13725 Marignane Cedex (FR)
(72) Inventeur: BEDUS, Olivier, 13121 AURONS (FR); TESTA, Sébastien, 86695 Nordendorf (DE); PERRET, Adrien, 13122 VENTABREN (FR)
(74) Mandataire: GPI & Associés

(56) Documents cités:
- AU-A- 3 979 972
- FR-A- 447 144

## Description

La présente invention concerne une structure transparente pour fenêtre et un aéronef.

Un aéronef, et notamment un giravion, peut comporter une structure porteuse munie d'une fenêtre qui est obturée par une structure transparente. Par exemple, une porte ou une cloison latérale d'un aéronef peut comporter une telle fenêtre.

Le terme « transparent » fait référence à un organe laissant traverser des ondes visibles par un humain, pour qu'un individu puisse voire un environnement extérieur au travers de cet organe.

Cette structure transparente peut être munie d'une paroi transparente qui est immobile dans le référentiel de la structure porteuse. La fenêtre est alors en permanence obturée.

Pour permettre à un opérateur d'observer précisément le milieu extérieur à l'aéronef sans ouvrir une porte, par exemple lors d'une opération de treuillage, la paroi transparente peut comporter une bulle. La bulle est en saillie de la structure porteuse transversalement vers le milieu extérieur. Bien qu'efficace, une telle bulle tend à générer une traînée aérodynamique pénalisante lorsque l'aéronef effectue une phase de vol d'avancement.

De manière alternative, la structure transparente peut comprendre une paroi porteuse transparente. La paroi porteuse délimite une ouverture inscrite dans cette paroi porteuse. Dès lors, la paroi porteuse porte une paroi mobile transparente qui est mobile par rapport à la paroi porteuse. La paroi mobile peut obturer, au moins partiellement et sur requête, l'ouverture de la paroi porteuse. Dans une position fermée, la paroi mobile obture l'ouverture de la paroi porteuse. Dans une position ouverte, la paroi mobile n'obture pas ou obture partiellement l'ouverture de la paroi porteuse.

Par exemple, l'avion connu sous la dénomination TB-10 et l'hélicoptère AW149® de la société AGUSTA possèdent une telle structure transparente.

La réalisation d'une telle structure transparente peut être délicate. En particulier, l'obtention d'une interface étanche entre la paroi porteuse et la paroi mobile peut être difficile à obtenir, en particulier avec une paroi mobile de grandes dimensions. Un joint peut être disposé entre la paroi porteuse et la paroi mobile mais un tel joint tend à se dégrader ce qui conduit à une durée de vie limitée.

Des documents sont éloignés de cette problématique.

Ainsi, le document FR 2.935.644 décrit une structure transparente pour une porte. La structure transparente est munie d'un premier panneau vitré. De plus, un deuxième panneau vitré est monté mobile en rotation par rapport au premier panneau vitré autour d'un axe de pivotement

Le deuxième panneau est ainsi monté sur la porte par l'intermédiaire d'un mécanisme à charnière. Le deuxième panneau n'est pas strictement inscrit dans le premier panneau.

Le document FR 2.787.498 décrit une baie vitrée à volet mobile. Le volet peut être mobile en rotation autour de l'axe de rotation d'une articulation. Cette articulation est complexe en comprenant une base solidaire de la baie vitrée, un levier solidaire du volet et articulé à la base, des ressorts en épingles, des butées...

Le document US 5.809.706 présente un ouvrant transparent mobile au sein d'une paroi porteuse transparente. L'ouvrant peut être un ouvrant pivotant qui est articulé à la paroi porteuse par un mécanisme à charnière. Ce mécanisme à charnière est muni d'un élément immobile attaché à la paroi porteuse et d'un élément mobile attaché à l'ouvrant.

L'élément mobile est articulé à l'élément immobile autour d'un axe d'articulation par un pivot. En outre, lorsque l'ouvrant est fermé, l'élément immobile et l'élément mobile sont coplanaires.

Pour mémoire, le terme « charnier » désigne parfois l'élément immobile du mécanisme à charnière. Dès lors, le terme « charnière » désigne parfois l'élément mobile du mécanisme à charnière qui est mobile en rotation par rapport à l'élément immobile autour du pivot. Ce pivot s'étend selon un axe de rotation du mécanisme à charnière, le pivot traversant au moins un oeillet de l'élément immobile et au moins un oeillet de l'élément mobile. Le pivot peut prendre la forme d'une tige, et est parfois dénommé « gond ».

Le document WO 2006/020.235 présente un ouvrant transparent pour un véhicule. Cet ouvrant est articulé sur des montants d'une structure.

Le document AU3979972 décrit un déviateur pour dévier un flux d'air ou de pluie.

Le document FR 447144 est aussi connu.

La présente invention a alors pour objet de proposer une structure transparente pour fenêtre, notamment d'aéronef, munie d'une paroi porteuse transparente ainsi que d'une paroi mobile transparente visant à optimiser la durée de vie d'un joint d'étanchéité. La paroi mobile peut être qualifiée d'ouvrant.

Ainsi, l'invention a pour objet une structure transparente pour fenêtre, cette structure transparente étant munie d'une paroi porteuse transparente qui est immobile dans un référentiel de la structure transparente, la paroi porteuse délimitant une ouverture, la structure transparente comprenant une paroi mobile transparente, cette paroi mobile étant montée mobile sur la paroi porteuse pour obturer l'ouverture dans une position fermée et pour ne pas obturer au moins partiellement l'ouverture dans une position ouverte, la paroi porteuse s'étendant en épaisseur d'une face dite « première face immobile » à une face dite « deuxième face immobile », la paroi mobile s'étendant en épaisseur d'une face dite « première face mobile » à une face dite « deuxième face mobile ».

Cette structure transparente comporte un joint. Ce joint est porté par la paroi porteuse, ce joint entourant l'ouverture, ce joint étant comprimé par la paroi mobile dans la position fermée.

En outre, la paroi mobile est montée mobile en rotation sur la paroi porteuse, la paroi mobile étant articulée à la paroi porteuse par au moins un mécanisme à charnière. Chaque mécanisme à charnière présente un élément immobile ainsi qu'un élément mobile et un pivot articulant l'élément immobile à l'élément mobile, le pivot s'étendant selon un axe de rotation, l'axe de rotation étant décalé par rapport au joint transversalement en étant situé dans un plan orthogonal à la deuxième face immobile et ne passant pas par le joint, l'axe de rotation étant décalé par rapport au joint en élévation en n'étant pas inscrit dans l'ouverture, l'élément immobile comprenant une face dite « face d'appui immobile » qui est solidarisée à la paroi porteuse, la face d'appui immobile étant en regard de la deuxième face immobile et contenue dans un plan dit « plan immobile », l'élément mobile comprenant une face dite « face d'appui mobile » qui est solidarisée à la paroi mobile, la face d'appui mobile étant en regard de la deuxième face mobile et contenue dans un plan dit « plan mobile », le plan mobile et le plan immobile étant séparés par un angle compris entre 0 degré exclu et 180 degrés exclu dans ladite position fermée.

La structure transparente comporte aussi au moins un loquet pour immobiliser sur requête la paroi mobile dans la position fermée.

L'expression « délimitant une ouverture » signifie que la paroi porteuse présente un bord décrivant une ligne fermée qui délimite l'ouverture.

L'expression « transversalement » fait référence à des directions allant du centre de l'ouverture vers un bord de la paroi porteuse qui décrit une ligne fermée délimitant l'ouverture. Si l'ouverture a une forme de disque, le terme « transversal » peut alors être associé au terme « radial ».

L'expression « en élévation » fait référence à des directions orthogonales aux faces de la paroi mobile et de la paroi porteuse.

Le terme « loquet » fait référence à un moyen manoeuvrable par un individu pour immobiliser la paroi mobile dans la position fermée.

Dès lors, chaque mécanisme à charnière présente au moins voire uniquement trois éléments, à savoir l'élément immobile ainsi que l'élément mobile et le pivot. Le pivot confère à l'élément mobile un degré de liberté en rotation autour de l'axe de rotation par rapport à l'élément immobile.

En présence de plusieurs mécanismes à charnières, les axes de rotation des mécanismes à charnière sont favorablement confondus en formant un seul et même axe de rotation.

Dès lors, ces axe de rotation ne sont pas disposés au droit du joint et ne sont pas confondus avec un axe d'extension du joint. En effet, les axes de rotation sont décalés transversalement et en élévation par rapport au joint.

En outre, dans la position fermée, le plan mobile d'appui de l'élément mobile est distinct du plan immobile d'appui de l'élément immobile contrairement à la pratique usuelle.

Le pivot de chaque mécanisme à charnière est ainsi désaxé par rapport au joint afin de limiter les frottements de la paroi mobile sur le joint lors du passage de la position fermée vers une position ouverte et inversement.

Ce décalage tend à limiter les effets de cisaillement sur le joint pour limiter son usure. La durée de vie du joint et la qualité de l'étanchéité obtenue en position fermée peuvent alors être optimisées, même avec une paroi mobile de grandes dimensions.

En effet, l'obtention d'une étanchéité acceptable et durable entre la paroi mobile et la paroi porteuse avec une paroi porteuse de grandes dimensions, par exemple de l'ordre 45 centimètres de largeur et de 55 centimètres de longueur, est en effet difficile à obtenir. Une structure selon l'invention peut tendre à résoudre ce problème. Par exemple, la paroi mobile peut couvrir une surface supérieure à 30% de la surface totale de la structure transparente.

La structure transparente peut de plus comporter une ou plusieurs des caractéristiques qui suivent.

Ainsi, la structure transparente peut comporter un dispositif de maintien pour maintenir sur requête la paroi mobile dans la position ouverte.

Un tel dispositif de maintien peut comprendre un pion à tête arrondie solidaire de la deuxième face mobile et apte à pénétrer dans un réceptacle, une goupille par exemple agencée sur un plafond et apte à coopérer avec une attache de la paroi mobile, un câble solidaire de la paroi mobile et apte à coopérer avec une attache extérieure à la paroi mobile....

Selon un autre aspect, l'ouverture peut être inscrite dans la paroi porteuse.

Selon un autre aspect, au moins une desdites paroi porteuse et paroi mobile peut être réalisée à partir de poly(méthacrylate de méthyle).

Le poly(méthacrylate de méthyle) est aussi connu sous l'acronyme « PMMA », de l'anglais poly(methyl methacrylate).

Une telle matière tend à limiter la propagation de fissures éventuelles au sein de la paroi concernée.

Selon un autre aspect, la paroi porteuse peut comporter une paroi principale présentant une première épaisseur et un renfort, le renfort étant fixé sur la paroi principale autour de ladite ouverture, ledit élément immobile étant fixé au renfort.

La paroi porteuse peut ainsi présenter une épaisseur moyenne faible, en étant simplement renforcée autour de l'ouverture.

Le renfort peut être réalisé avec une matière transparente, et par exemple la même matière que la paroi principale.

Selon un autre aspect, au moins une cale peut être interposée entre la face d'appui immobile et le renfort.

La cale peut permettre d'optimiser la position de l'axe de rotation du mécanisme à charnière correspondant par rapport au joint.

Un bloc de matière de calage peut être agencé entre la face d'appui mobile et la paroi mobile.

Le bloc de matière de calage peut permettre d'optimiser la position de l'axe de rotation du mécanisme à charnière correspondant par rapport au joint.

Selon un autre aspect, la paroi porteuse peut comporter une bordure périphérique entourant l'ouverture et un bord tombant périphérique saillant transversalement de la bordure périphérique et affleurant la première face immobile, le bord tombant périphérique délimitant en élévation une gorge dans laquelle est agencé le joint, la bordure périphérique délimitant transversalement la gorge, la paroi mobile comportant un bord tombant extérieur à sa périphérie, le bord tombant extérieur comportant un chanfrein au regard du joint et de la gorge, le chanfrein étant en contact avec ledit joint dans ladite position fermée.

Le bord tombant périphérique et la bordure périphérique peuvent former une structure présentant en coupe une forme en L pour délimiter la gorge.

De même, le bord tombant extérieur peut permettre de former une structure présentant en coupe une forme en L à la périphérie de la paroi mobile.

Dès lors, le chanfrein permet de limiter les frottements de la paroi mobile sur le joint.

De plus, le bord tombant périphérique peut constituer un obstacle permettant de limiter la probabilité que la paroi mobile traverse l'ouverture de part en part. Par exemple et sur un aéronef, cette caractéristique peut limiter les risques d'éjection de la paroi mobile en dehors de l'aéronef.

Selon un autre aspect, le joint peut être fixé au bord tombant périphérique.

Selon un autre aspect, un jeu transversal peut séparer le joint de la bordure périphérique lorsque la paroi mobile est dans une position ouverte.

Ce jeu tend à au moins limiter l'écrasement du joint contre la paroi porteuse dans la position fermée.

Selon un autre aspect, le joint peut être un joint boudin.

Un tel joint peut s'avérer suffisamment « élastique » pour permettre le positionnement de la paroi mobile dans la position fermée, tout en étant résistant.

Selon un autre aspect, le joint peut être recouvert d'une résine de protection.

Une telle résine peut être une résine anti-frottement de type silicone pour limiter l'usure du joint.

Selon un autre aspect, le loquet peut comporter un pion fixé à la paroi porteuse, ledit pion saillant de ladite paroi porteuse selon une direction d'extension, ledit loquet comportant un levier mobile en rotation autour dudit pion, ledit levier s'étendant transversalement selon une direction perpendiculaire à la direction d'extension, ledit loquet comprenant une cale pelable en contact avec le levier.

Selon un autre aspect, la paroi mobile peut être inscrite dans l'ouverture dans la position fermée, la première face mobile n'affleurant pas la première face immobile en étant en retrait dans ladite ouverture.

Par contre, la deuxième face mobile peut affleurer la deuxième face immobile.

Selon un autre aspect, la paroi porteuse peut être fixée à un cadre de fenêtre par des moyens de fixation usuels.

De tels moyens de fixation peuvent comprendre une structure de fixation standard munie d'un joint par exemple.

Selon un autre aspect, l'ouverture pouvant être délimitée par un rebord suivant une ligne fermée ayant plusieurs segments, ledit au moins un mécanisme à charnière comprenant plusieurs mécanismes à charnière, lesdits mécanismes à charnière peuvent être fixés à un même segment.

Chaque segment dépourvu desdits mécanismes à charnière peut coopérer avec au moins un loquet, éventuellement avec deux loquets.

L'invention vise de plus un aéronef muni d'une cloison délimitant une fenêtre, cet aéronef comportant une structure transparente du type décrit précédemment pour obturer ladite fenêtre. La paroi porteuse est alors fixée à la cloison.

Eventuellement, la deuxième face mobile dans la position fermée et la deuxième face immobile sont en regard d'un espace intérieur dudit aéronef.

L'invention et ses avantages apparaîtront avec plus de détails dans le cadre de la description qui suit avec des exemples donnés à titre illustratif en référence aux figures annexées qui représentent :
- la figure 1, une vue d'une structure transparente selon l'invention,
- la figure 2, une vue d'un mécanisme à charnière,
- la figure 3, une coupe schématique d'un mécanisme à charnière,
- la figure 4, une vue schématique d'un loquet, et
- la figure 5 une vue d'un aéronef selon l'invention.

Les éléments présents dans plusieurs figures distinctes sont affectés d'une seule et même référence.

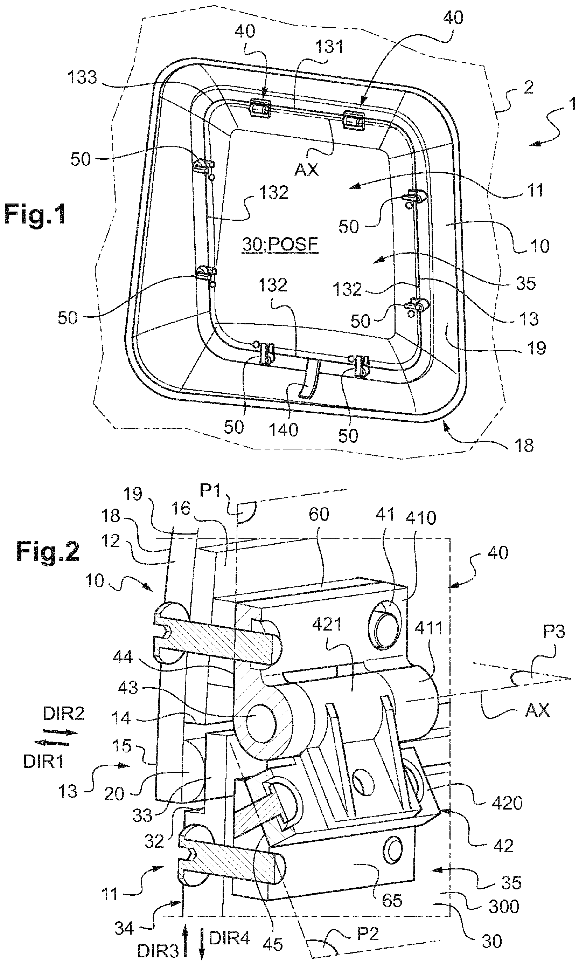

La figure 1 présente une structure transparente 1 selon l'invention.

La structure transparente comporte une paroi porteuse 10. Cette paroi porteuse 10 est transparente, en étant par exemple réalisée à partir d'un matériau de type poly(méthacrylate de méthyle).

La paroi porteuse 10 est par exemple fixée à un cadre de fenêtre par des moyens usuels pour obturer partiellement une fenêtre.

En outre, la paroi porteuse 10 délimite une ouverture 11 de la fenêtre.

Cette ouverture 11 peut être totalement inscrite dans la paroi porteuse 10. Dès lors, la paroi porteuse présente une forme annulaire, pas nécessairement circulaire, en s'étendant d'un rebord extérieur à fixer à un cadre de fenêtre à un rebord intérieur 13 délimitant l'ouverture 11.

Par ailleurs, la paroi porteuse 10 s'étend en épaisseur d'une face dite « première face immobile 18 » à une face dite « deuxième face immobile 19 ».

La structure transparente 1 comporte de plus une paroi dite « paroi mobile 30 » transparente.

A l'instar de la paroi porteuse 10, la paroi mobile 30 est par exemple réalisée à partir de poly(méthacrylate de méthyle), et par exemple peut présenter une épaisseur de 8 millimètres. Une telle épaisseur peut permettre d'offrir à la structure transparente une rigidité suffisante pour ne pas avoir un effet de ventre, et de conserver un niveau d'étanchéité optimisé.

En outre, la paroi mobile 30 s'étend en épaisseur d'une face dite « première face mobile » à une face dite « deuxième face mobile 35 ».

La paroi mobile 30 a pour fonction d'obturer l'ouverture 11 dans la position fermée POSF illustrée sur la figure 1, et de ne pas obturer au moins partiellement cette ouverture 11 dans une position ouverte. Cette paroi mobile peut notamment être de grandes dimensions pour permettre à un individu de passer au moins sa tête au travers de l'ouverture 11.

Le terme « immobile » peut ainsi être associé à un organe qui est immobile dans le référentiel de la structure transparente 1, alors que le terme « mobile » peut ainsi être associé à un organe qui est mobile dans le référentiel de la structure transparente 1.

Dès lors, la paroi mobile 30 est montée mobile sur la paroi porteuse 10 pour obturer ou ne pas obturer sur requête l'ouverture 11.

A cet effet, la paroi mobile 30 est articulée à la paroi porteuse 10 autour d'un axe de rotation AX par au moins un mécanisme à charnière 40. La figure 1 illustre la présence de deux mécanismes à charnière, mais un nombre de mécanismes à charnière plus faible ou plus élevé est envisageable.

En outre, un joint non visible sur la figure 1 peut être agencé entre la paroi mobile 30 et la paroi porteuse 10 pour garantir que la structure transparente 1 est étanche lorsque la paroi mobile est dans la position fermée. Ce joint 20 peut être porté par la paroi porteuse 10, voire par son rebord intérieur 13, afin d'entourer l'ouverture 11. Le joint 20 est alors comprimé par la paroi mobile 30 dans la position fermée POSF.

De plus, la structure transparente 1 comporte au moins un loquet 50 pour immobiliser sur requête la paroi mobile 30 dans la position fermée POSF.

Par exemple, l'ouverture 11 peut être délimitée par le rebord intérieur 13 suivant une ligne fermée ayant plusieurs segments 131, 132, deux segments adjacents étant reliés par un coin 133.

Dès lors, les mécanismes à charnière 40 sont fixés à un même segment 131.

En présence d'un seul mécanisme à charnière, ce mécanisme à charnière peut être au milieu d'un segment.

Par ailleurs, la portion mobile 30 s'étend en élévation d'un segment inférieur à un segment supérieur, le segment supérieur étant sensiblement contenu dans un plan horizontal supérieur qui est à l'aplomb d'un plan horizontal inférieur contenant sensiblement le segment inférieur. Dès lors, chaque mécanisme à charnière 40 peut être fixé au segment supérieur. En effet, il peut s'avérer utile de mettre les mécanismes à charnières en position haute pour ne pas gêner le déplacement ultérieur de passager, par exemple en cas d'évacuation.

De plus, chaque segment 132 dépourvu desdits mécanismes à charnière 40 peut être fixé à au moins un loquet 50. En particulier, les mécanismes à charnière 40 peuvent être fixés à un même segment 131, et chaque segment 132 dépourvu desdits mécanismes à charnière 40 peut coopérer avec deux loquets 50.

La figure 2 explicite un mécanisme à charnière 40 agencé sur la paroi porteuse 10 et la paroi mobile 30.

Chaque mécanisme à charnière 40 peut comporter un élément immobile 41 ainsi qu'un élément mobile 42 et un pivot 43. Le pivot 43 articule alors l'élément immobile 41 à l'élément mobile 42 en conférant un degré de liberté en rotation à l'élément mobile 42 par rapport à l'élément immobile 41 autour de l'axe de rotation AX.

Dès lors, l'élément immobile 41 est muni d'un assisse dite « assisse immobile 410 » à fixer à la paroi porteuse 10. De plus, l'élément immobile 41 est muni d'une ferrure solidaire de l'assisse immobile 410. Cette ferrure comporte par exemple au moins un oeillet immobile 411 solidaire de l'assisse immobile 410.

Pour être fixée à la paroi porteuse 10, l'assisse immobile 410 présente une face dite « face d'appui immobile 44 » à accoler contre la paroi porteuse 10. La face d'appui immobile 44 est en regard de la deuxième face immobile 19 et contenue dans un plan dit « plan immobile P1 ».

Dès lors, la paroi porteuse peut comprendre une unique paroi accolée contre la face d'appui immobile 44, en utilisant par exemple des moyens de vissage vissant l'élément immobile à la paroi porteuse. Des moyens alternatifs sont possibles tels que des moyens de collage, de rivetage...

De manière alternative, la paroi porteuse peut présenter une paroi principale 12. Cette paroi principale 12 présente par exemple une épaisseur de l'ordre 5 millimètres.

De plus, la paroi porteuse peut présenter un renfort 16 au niveau du rebord intérieur 13. Ce renfort 16 est alors fixé sur la paroi principale 12 autour de l'ouverture 11, en étant agencé sur la deuxième face immobile, par exemple. Le renfort 16 peut par exemple présenter une épaisseur de l'ordre de 5 millimètres.

Dès lors, l'assisse immobile 410 repose sur le renfort.

Par exemple, la face d'appui immobile 44 est accolée directement au renfort 16, ou indirectement par le biais d'au moins une cale 60 qui est interposée entre la face d'appui immobile 44 et le renfort 16. Cette cale 60 peut être une cale pelable présentant une épaisseur pouvant être ajustée en retirant des strates de la cale 60.

De même, l'élément mobile 42 peut être muni d'un assisse dite « assisse mobile 420 » à fixer à la paroi mobile 30. De plus, l'élément mobile 42 est muni d'une ferrure solidaire de l'assisse mobile 42. Cette ferrure comporte par exemple au moins un oeillet mobile 421 solidaire de l'assisse mobile 420.

Pour être fixée à la paroi mobile 30, l'assisse mobile présente une face dite « face d'appui mobile 45 » à accoler contre la paroi mobile 30. La face d'appui mobile 45 est en regard de la deuxième face mobile 35 et contenue dans un plan dit « plan mobile P2 ».

Dès lors, la paroi mobile 30 peut comprendre une unique paroi accolée contre la face d'appui mobile 45, en utilisant par exemple des moyens de vissage vissant l'élément immobile à la paroi porteuse. Des moyens alternatifs sont possibles tels que des moyens de collage, de rivetage...

De manière alternative, la paroi mobile peut présenter une paroi primaire 300 apte à couvrir l'ouverture 11. Dès lors, la face d'appui mobile 45 peut être fixée à la paroi primaire 300 par un bloc de matière de calage 65. Le bloc de matière de calage 65 peut être une cale pelable présentant une épaisseur pouvant être ajustée en retirant des strates du bloc de matière de calage 65

Eventuellement et à l'instar de la paroi porteuse, la paroi mobile peut comporter un renfort.

Selon un autre aspect, le pivot peut comprendre au moins un organe allongé traversant les oeillets mobiles 421 et les oeillets immobiles 411. L'organe allongé peut prendre la forme d'au moins une tige par exemple.

Selon un autre aspect, le joint 20 est interposé entre le rebord intérieur 13 de la paroi porteuse et un pourtour de la paroi mobile 30.

Par exemple, le rebord intérieur 13 peut présenter une forme en L délimitant une gorge 17 dans laquelle se trouve le joint 20. Ainsi, le rebord intérieur 13 présente une bordure périphérique 14. La bordure périphérique 14 s'étend selon l'épaisseur de la paroi porteuse, en entourant l'ouverture 11. Le cas échéant, la bordure périphérique 14 peut représenter la tranche d'un renfort 16.

De plus, le rebord intérieur 13 présente un bord tombant périphérique 15 saillant transversalement de la bordure périphérique 14 en affleurant la première face immobile 18. Le cas échéant, le bord tombant périphérique 15 peut représenter une portion de la paroi principale 12 saillant du renfort 16.

Dès lors, le bord tombant périphérique 15 délimite en élévation la gorge 17, selon une direction DIR1 allant de la deuxième face immobile 19 à la première face immobile 18. De plus, la bordure périphérique 14 délimite transversalement la gorge 17 selon des directions DIR3 allant de l'ouverture 11 vers le rebord extérieur.

De même, la paroi mobile 30 peut présenter un pourtour en forme de L présentant un bord tombant extérieur 33 au regard du bord tombant périphérique 15 et une bordure extérieure 32 au regard de la bordure périphérique 14 dans la position fermée de la paroi mobile. Le bord tombant extérieur 33 délimite en élévation la gorge 17, selon une direction DIR2 allant de la première face immobile 18 à la deuxième face immobile 19. De plus, la bordure extérieure 32 délimite transversalement la gorge 17 selon des directions DIR4 allant du rebord extérieur vers l'ouverture 11.

Dans ce contexte, le joint 20 peut être fixé au bord tombant périphérique 15.

Selon un autre aspect, la figure 2 illustre une variante selon laquelle la paroi mobile 30 est inscrite dans l'ouverture 11 dans la position fermée POSF, la première face mobile 34 n'affleurant pas la première face immobile 18 en étant en retrait dans l'ouverture 11.

Pour limiter l'usure du joint par frottement avec la paroi mobile, le plan mobile P2 et le plan immobile P1 sont par ailleurs séparés par un angle compris entre 0 degré exclu et 180 degrés exclu dans ladite position fermée POSF.

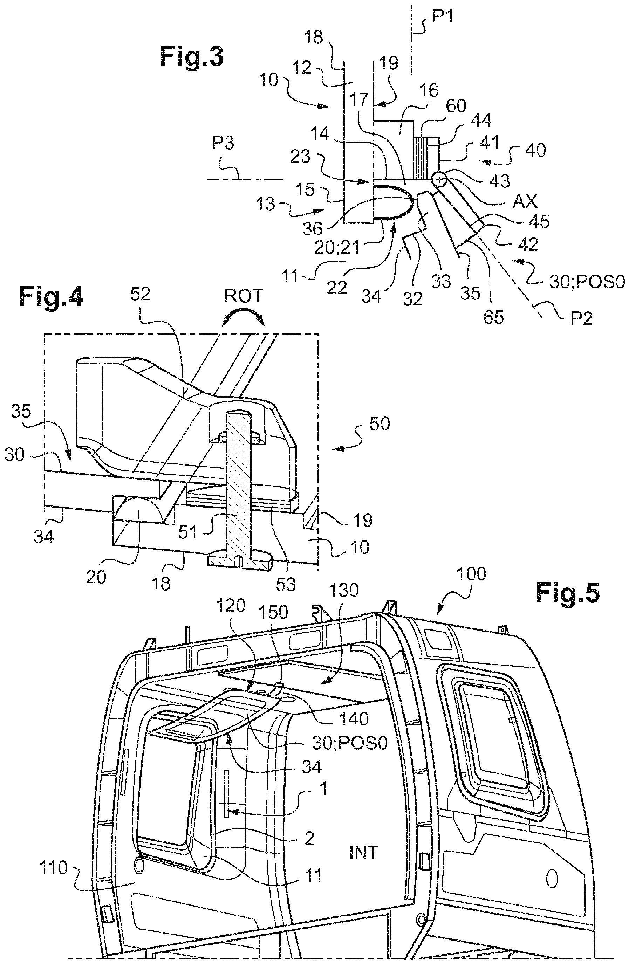

De plus et en référence à la figure 3, un jeu transversal 23 peut séparer le joint 20 de la bordure périphérique 14 lorsque la paroi mobile 30 est dans une position ouverte POSO.

Par ailleurs, le joint 20 peut être un joint dénommé classiquement « joint boudin 21 ».

Pour limiter l'usure du joint par frottement avec la paroi mobile, le joint 20 peut être recouvert d'une résine de protection 22. Le résine de protection peut être une résine dite « anti-fretting ».

Selon un autre aspect, l'axe de rotation AX de l'élément mobile 30 par rapport à l'élément immobile 41 est décalé par rapport au joint 20 pour limiter l'usure du joint.

Ainsi, cet axe de rotation AX est décalé transversalement par rapport au joint en étant situé dans un plan P3 qui est orthogonal à la deuxième face immobile 19 et qui ne passe pas par le joint 20.

De plus, l'axe de rotation AX est décalé par rapport au joint 20 en élévation en n'étant pas inscrit dans l'ouverture 11.

Par ailleurs, le bord tombant extérieur 33 peut comporter un chanfrein 36 au regard dudit joint 20 et de la gorge 17. Ce chanfrein 36 est en contact avec le joint 20 dans la position fermée POSF mais tend à limiter les frottements de la paroi mobile 30 sur le joint 20 lors de sa manoeuvre.

La figure 4 illustre un loquet 50 selon l'invention.

Ce loquet 50 comporte un pion 51 fixé à la paroi porteuse 10. Ce pion 51 saille de la paroi porteuse 10 selon une direction d'extension allant de la première face immobile 18 à la deuxième face immobile 19.

De plus, le pion porte une cale pelable 53, par exemple vissée sur un filetage du pion. Le pion peut comporter une tête, la paroi mobile étant coincée entre la tête du pion et la cale pelable.

En outre, le loquet 50 comporte un levier 52 mobile en rotation autour d'une extrémité du pion 51. Ce levier 52 s'étend selon une direction perpendiculaire à la direction d'extension. Dès lors, le levier peut être déplacé pour soit être en appui contre la deuxième face mobile 35 de la paroi mobile 30 afin d'immobiliser la paroi mobile, soit être positionné au droit de la paroi porteuse 10 pour permettre la rotation de la paroi mobile 30.

Eventuellement, la paroi mobile peut présenter une structure d'accueil, schématisée sur la figure 1, qui coopère avec le levier lorsque le loquet immobilise la paroi mobile. La structure d'accueil peut comporter deux rampes débouchant sur un creux dans lequel le loquet est positionné pour maintenir la paroi mobile en position fermée. Pour ouvrir le hublot, le levier est extrait hors du creux en glissant sur une rampe.

La figure 5 illustre un véhicule 100 muni d'une cloison 110 délimitant une fenêtre. Un tel véhicule peut en particulier être un aéronef. En outre, Cette cloison peut être une porte ou une paroi du véhicule 100 qui sépare un espace intérieur INT du véhicule 100 et d'un milieu situé à l'extérieur du véhicule.

La deuxième face mobile 35 dans la position fermée et la deuxième face immobile 19 sont par exemple en regard de l'espace intérieur INT dudit aéronef 10.

En outre, la structure transparente 1 peut comprendre un dispositif de maintien 120 pour maintenir la paroi mobile dans sa position ouverte POSO. Un tel dispositif comporte par exemple une attache solidaire de la paroi mobile 30 qui coopère avec une attache déportée. Par exemple, une telle attache déportée peut être agencée sur un plafond 130.

De manière alternative ou complémentaire, un dispositif de maintien peut comprendre une sangle 140. Cette sangle 140 s'étend selon sa longueur d'une première extrémité à une deuxième extrémité. La sangle 140 est fixée à sa première extrémité sur l'ouvrant, à savoir la portion mobile par exemple par une boucle de Velcro®, et à sa deuxième extrémité par un système d'accroche 150, tel qu'un bouton pression ou équivalent par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Structure transparente (1) pour fenêtre, ladite structure transparente (1) étant munie d'une paroi porteuse (10) transparente qui est immobile dans un référentiel de la structure transparente (1), la paroi porteuse (10) délimitant une ouverture (11), la structure transparente (1) comprenant une paroi mobile (30) transparente, ladite paroi mobile (30) étant montée mobile sur ladite paroi porteuse (10) pour obturer ladite ouverture (11) dans une position fermée (POSF) et pour ne pas obturer au moins partiellement ladite ouverture (11) dans une position ouverte (POSO), ladite paroi porteuse (10) s'étendant en épaisseur d'une première face immobile (18) à une deuxième face immobile (19), ladite paroi mobile (30) s'étendant en épaisseur d'une première face mobile (34) à une deuxième face mobile (35),
dont :
- un joint (20) est porté par la paroi porteuse (10), ledit joint (20) entourant ladite ouverture (11), ledit joint (20) étant comprimé par ladite paroi mobile (30) dans la position fermée (POSF),
- ladite paroi mobile (30) est montée mobile en rotation sur ladite paroi porteuse (10), ladite paroi mobile (30) étant articulée à ladite paroi porteuse (10) par au moins un mécanisme à charnière (40), chaque mécanisme à charnière (40) présentant un élément immobile (41) ainsi qu'un élément mobile (42) et un pivot (43) articulant l'élément immobile (41) à l'élément mobile (42), ledit pivot (43) s'étendant selon un axe de rotation (AX), ledit axe de rotation (AX) étant décalé par rapport audit joint (20) transversalement en étant situé dans un plan (P3) orthogonal à la deuxième face immobile (19) et ne passant pas par le joint (20), ledit axe de rotation (AX) étant décalé par rapport audit joint (20) en élévation en n'étant pas inscrit dans ladite ouverture (11), ledit élément immobile (41) comprenant une face dite «face d'appui immobile (44) » qui est solidarisée à la paroi porteuse (10), ladite face d'appui immobile (44) étant en regard de la deuxième face immobile (19) et contenue dans un plan dit « plan immobile (P1) », l'élément mobile (42) comprenant une face dite « face d'appui mobile (45) » qui est solidarisée à la paroi mobile (30), ladite face d'appui mobile (45) étant en regard de la deuxième face mobile (35) et contenue dans un plan dit « plan mobile (P2) »,
- ladite structure transparente (1) comporte au moins un loquet (50) pour immobilier sur requête ladite paroi mobile (30) dans la position fermée (POSF),
**caractérisée en ce que** le plan mobile (P2) et le plan immobile (P1) sont séparés par un angle compris entre 0 degré exclu et 180 degrés exclu dans ladite position fermée (POSF).

2. Structure transparente selon la revendication 1,
**caractérisée en ce que** ladite ouverture (11) est inscrite dans la paroi porteuse (10).

3. Structure transparente selon l'une quelconque des revendications 1 à 2,
**caractérisée en ce qu'**au moins une desdites paroi porteuse (10) et paroi mobile (30) est réalisée à partir de poly(méthacrylate de méthyle).

4. Structure transparente selon l'une quelconque des revendications 1 à 3,
**caractérisée en ce que** ladite paroi porteuse (10) comporte une paroi principale (12) et un renfort (16), le renfort (16) étant fixé sur la paroi principale (12) autour de ladite ouverture (11), ledit élément immobile (41) étant fixé au renfort (16).

5. Structure transparente selon la revendication 4,
**caractérisée en ce qu'**au moins une cale (60) est interposée entre ladite face d'appui immobile (44) et ledit renfort (16).

6. Structure transparente selon l'une quelconque des revendications 4 à 5,
**caractérisé en ce qu'**un bloc de matière de calage (65) est agencé entre ladite face d'appui mobile (45) et ladite paroi mobile (30).

7. Structure transparente selon l'une quelconque des revendications 1 à 6,
**caractérisée en ce que** ladite paroi porteuse (10) comporte une bordure périphérique (14) entourant ladite ouverture (11) et un bord tombant périphérique (15) saillant transversalement de ladite bordure périphérique et affleurant ladite première face immobile (18), ledit bord tombant périphérique (15) délimitant en élévation une gorge (17) dans laquelle est agencé ledit joint (20), ladite bordure périphérique (14) délimitant transversalement ladite gorge (17), ladite paroi mobile (30) comportant un bord tombant extérieur (33) à sa périphérie, ledit bord tombant extérieur (33) comportant un chanfrein (36) au regard dudit joint (20) et de ladite gorge (17), ledit chanfrein (36) étant en contact avec ledit joint (20) dans ladite position fermée (POSF).

8. Structure transparente selon la revendication 7,
**caractérisée en ce que** ledit joint (20) est fixé au bord tombant périphérique (15).

9. Structure transparente selon l'une quelconque des revendications 7 à 8,
**caractérisée en ce qu'**un jeu transversal (23) sépare ledit joint (20) de la bordure périphérique (14) lorsque la paroi mobile (30) est dans une position ouverte (POSO).

10. Structure transparente selon l'une quelconque des revendications 1 à 9,
**caractérisée en ce que** ledit joint (20) est un joint boudin (21).

11. Structure transparente selon l'une quelconque des revendications 1 à 10,
**caractérisée en ce que** ledit joint (20) est recouvert d'une résine de protection (22).

12. Structure transparente selon l'une quelconque des revendications 1 à 11,
**caractérisée en ce que** ledit loquet (50) comporte un pion (51) fixé à la paroi porteuse (10), ledit pion (51) saillant de ladite paroi porteuse (10) selon une direction d'extension, ledit loquet (50) comportant un levier (52) mobile en rotation autour dudit pion (51), ledit levier (52) s'étend transversalement selon une direction perpendiculaire à la direction d'extension, ledit loquet (50) comprenant une cale pelable (53) en contact avec le levier.

13. Structure transparente selon l'une quelconque des revendications 1 à 12,
**caractérisée en ce que** ladite paroi mobile (30) est inscrite dans ladite ouverture (11) dans la position fermée (POSF), ladite première face mobile (34) n'affleurant pas la première face immobile (18) en étant en retrait dans ladite ouverture (11).

14. Structure transparente selon l'une quelconque des revendications 1 à 13,
**caractérisée en ce que** ladite paroi porteuse (10) est fixée à un cadre de fenêtre (2).

15. Structure transparente selon l'une quelconque des revendications 1 à 14,
**caractérisée en ce que** ladite ouverture (11) étant délimitée par un rebord intérieur (13) suivant une ligne fermée ayant plusieurs segments (131, 132), ledit au moins un mécanisme à charnière comprenant plusieurs mécanismes à charnière, lesdits mécanismes à charnière (40) sont fixés à un même segment (131).

16. Structure transparente selon la revendication 15,
**caractérisée en ce que** chaque segment (132) dépourvu desdits mécanismes à charnière (40) coopère avec au moins un loquet (50).

17. Aéronef (100) muni d'une cloison (110) délimitant une fenêtre,
**caractérisée en ce que**, ledit aéronef (100) comporte une structure transparente (1) selon l'une quelconque des revendications 1 à 16 pour obturer ladite fenêtre.

18. Aéronef selon la revendication 17,
**caractérisée en ce que** ladite deuxième face mobile (35) dans la position fermée et la deuxième face immobile (19) sont en regard d'un espace intérieur (INT) dudit aéronef (10).

## Patentansprüche

1. Transparente Struktur (1) für ein Fenster, wobei die transparente Struktur (1) mit einer transparenten Stützwand (10) versehen ist, die in einem Bezugssystem der transparenten Struktur (1) unbeweglich ist, wobei die Stützwand (10) eine Öffnung (11) begrenzt, wobei die transparente Struktur (1) eine transparente bewegliche Wand (30) umfasst, die bewegliche Wand (30) beweglich an der Stützwand (10) montiert ist, um in einer geschlossenen Position (POSF) die Öffnung (11) zu verschließen und die Öffnung (11) in einer offenen Position (POSO) zumindest teilweise nicht zu verschließen, wobei sich die Stützwand (10) in ihrer Dicke von einer ersten stationären Seite (18) zu einer zweiten stationären Seite (19) erstreckt und sich die bewegliche Wand (30) in ihrer Dicke von einer ersten beweglichen Seite zu einer zweiten beweglichen Seite (35) erstreckt, und bei der:
- eine Dichtung (20) von der Stützwand (10) getragen ist, wobei die Dichtung (20) die Öffnung (11) umgibt und die Dichtung (20) in der geschlossenen Position (POSF) durch die bewegliche Wand (30) komprimiert ist,
- die bewegliche Wand (30) drehbar an der Stützwand (10) montiert ist, wobei die bewegliche Wand (30) durch mindestens einen Scharniermechanismus (40) an der Stützwand (10) angelenkt ist, wobei jeder Scharniermechanismus (40) ein stationäres Element (41) sowie ein bewegliches Element (42) und einen Drehpunkt (43) aufweist, der das stationäre Element (41) an das bewegliche Element (42) anlenkt, wobei sich der Drehpunkt (43) entlang einer Drehachse (AX) erstreckt, wobei die Drehachse (AX) in Bezug auf die Dichtung (20) quer versetzt ist, indem sie in einer Ebene (P3) angeordnet ist, die orthogonal zur zweiten stationären Seite (19) verläuft, und nicht durch die Dichtung (20) verläuft, wobei die Drehachse (AX) in Bezug auf die Dichtung (20) in der Höhe versetzt ist, indem sie nicht in die Öffnung (11) einbeschrieben ist, wobei das stationäre Element (41) eine als "stationäre Stützseite (44)" bezeichnete Seite umfasst, die mit der Stützwand (10) fest verbunden ist, wobei die stationäre Stützseite (44) der zweiten stationären Seite (19) zugewandt ist und in einer als "stationäre Ebene (P1)" bezeichneten Ebene enthalten ist, wobei das bewegliche Element (42) eine als "bewegliche Stützseite (45)" bezeichnete Seite umfasst, die an der beweglichen Wand (30) befestigt ist, wobei die bewegliche Stützseite (45) der zweiten beweglichen Seite (35) zugewandt ist und in einer als bewegliche Ebene (P2) bezeichneten Ebene enthalten ist,
- die transparente Struktur (1) mindestens eine Verriegelung (50) aufweist, um die bewegliche Wand (30) auf Anforderung in der geschlossenen Position (POSF) zu fixieren,
**dadurch gekennzeichnet, dass** die bewegliche Ebene (P2) und die stationäre Ebene (P1) in der geschlossenen Position (POSF) durch einen Winkel größer 0 Grad und kleiner 180 Grad beabstandet sind.

2. Transparente Struktur nach Anspruch 1, **dadurch gekennzeichnet, dass** die Öffnung (11) in die Stützwand (10) einbeschrieben ist.

3. Transparente Struktur nach einem der Ansprüche 1 bis 2, **dadurch gekennzeichnet, dass** von Stützwand (10) und beweglieher Wand (30) mindestens eine aus Poly(methylmethacrylat) gefertigt ist.

4. Transparente Struktur nach einem der Ansprüche 1 bis 3, **dadurch gekennzeichnet, dass** die Stützwand (10) eine Hauptwand (12) und eine Verstärkung (16) umfasst, wobei die Verstärkung (16) an der Hauptwand (12) um die Öffnung (11) herum befestigt ist und das stationäre Element (41) an der Verstärkung (16) befestigt ist.

5. Transparente Struktur nach Anspruch 4, **dadurch gekennzeichnet, dass** mindestens eine Unterlegscheibe (60) zwischen der stationären Lagerfläche (44) und der Verstärkung (16) angeordnet ist.

6. Transparente Struktur nach einem der Ansprüche 4 bis 5, **dadurch gekennzeichnet, dass** ein Block aus Unterlegmaterial (65) zwischen der beweglichen Stützseite (45) und der beweglichen Wand (30) angeordnet ist.

7. Transparente Struktur nach einem der Ansprüche 1 bis 6, **dadurch gekennzeichnet, dass** die Stützwand (10) eine die Öffnung (11) umgebende umlaufende Kante (14) und eine quer zur umlaufenden Kante (15) vorspringende Fallkante (15) aufweist, die mit der ersten stationären Seite (18) bündig ist, wobei die umlaufende Fallkante (15) in der Höhe eine Nut (17) begrenzt, in der die Dichtung (20) angeordnet ist, wobei die umlaufende Kante (14) die Nut (17) quer begrenzt, wobei die bewegliche Wand (30) an ihrem Umfang eine äußere Fallkante (33) aufweist, wobei die äußere Fallkante (33) eine Fase (36) aufweist, die der Dichtung (20) und der Nut (17) gegenüberliegt, wobei die Fase (36) in der geschlossenen Position (POSF) mit der Dichtung (20) in Kontakt steht.

8. Transparente Struktur nach Anspruch 7, **dadurch gekennzeichnet, dass** die Dichtung (20) an der umlaufenden Fallkante (15) befestigt ist.

9. Transparente Struktur nach einem der Ansprüche 7 bis 8, **dadurch gekennzeichnet, dass** ein Querspiel (23) die Dichtung (20) von der Umfangskante (14) trennt, wenn sich die bewegliche Wand (30) in einer offenen Position (POSO) befindet.

10. Transparente Struktur nach einem der Ansprüche 1 bis 9, **dadurch gekennzeichnet, dass** die Dichtung (20) eine Schlauchdichtung (21) ist.

11. Transparente Struktur nach einem der Ansprüche 1 bis 10, **dadurch gekennzeichnet, dass** die Dichtung (20) mit einem Schutzharz (22) abgedeckt ist.

12. Transparente Struktur nach einem der Ansprüche 1 bis 11, **dadurch gekennzeichnet, dass** die Verriegelung (50) einen Stift (51) aufweist, der an der Stützwand (10) befestigt ist, wobei der Stift (51) von der Stützwand (10) in einer Ausdehnungsrichtung vorsteht, wobei die Verriegelung (50) einen Hebel (52) aufweist, der um den Stift (51) drehbar ist,
der Hebel (52) sich quer in einer zur Ausdehnungsrichtung senkrechten Richtung erstreckt, wobei die Verriegelung (50) eine abziehbare Unterlegscheibe (53) in Kontakt mit dem Hebel umfasst.

13. Transparente Struktur nach einem der Ansprüche 1 bis 12, **dadurch gekennzeichnet, dass** die bewegliche Wand (30) in der geschlossenen Position (POSF) in die Öffnung (11) einbeschrieben ist, wobei die erste bewegliche Seite (34) nicht mit der ersten stationären Seite (18) bündig ist, sondern in die Öffnung (11) eingesenkt ist.

14. Transparente Struktur nach einem der Ansprüche 1 bis 13, **dadurch gekennzeichnet, dass** die Stützwand (10) an einem Fensterrahmen (2) befestigt ist.

15. Transparente Struktur nach einem der Ansprüche 1 bis 14, **dadurch gekennzeichnet, dass** die Öffnung (11) durch eine Innenkante (13) entlang einer geschlossenen Linie mit mehreren Segmenten (131, 132) begrenzt ist, wobei der mindestens eine Scharniermechanismus mehrere Scharniermechanismen umfasst, und die Scharniermechanismen (40) an einem gleichen Segment (131) befestigt sind.

16. Transparente Struktur nach Anspruch 15, **dadurch gekennzeichnet, dass** jedes von den Scharniermechanismen (40) freie Segment (132) mit mindestens einer Verriegelung (50) zusammenwirkt.

17. Luftfahrzeug (100), das mit einer Trennwand (110) versehen ist, die ein Fenster begrenzt, **dadurch gekennzeichnet, dass** das Luftfahrzeug (100) eine transparente Struktur (1) nach einem der Ansprüche 1 bis 16 zum Verschließen des Fensters aufweist.

18. Luftfahrzeug nach Anspruch 17, **dadurch gekennzeichnet, dass** die zweite bewegliche Seite (35) in der geschlossenen Position und die zweite stationäre Seite (19) einem Innenraum (INT) des Luftfahrzeugs (10) zugewandt sind.

## Claims

1. Transparent structure (1) for a window, said transparent structure (1) being provided with a transparent supporting wall (10) which is immovable in a frame of reference of the transparent structure (1), the supporting wall (10) defining an opening (11), the transparent structure (1) comprising a transparent movable wall (30), said movable wall (30) being movably mounted on said supporting wall (10) so as to seal said opening (11) in a closed position (POSF) and so as not to seal at least part of said opening (11) in an open position (POSO), the thickness of said supporting wall (10) extending from a first immovable surface (18) to a second immovable surface (19), the thickness of said movable wall (30) extending from a first movable surface (34) to a second movable surface (35),
in which:
- a joint (20) is supported on the supporting wall (10), said joint (20) surrounding said opening (11), said joint (20) being compressed by said movable wall (30) in the closed position (POSF),
- said movable wall (30) is rotatably mounted on said supporting wall (10), said movable wall (30) being pivotably connected to said supporting wall (10) by means of at least one hinge mechanism (40), each hinge mechanism (40) having an immovable element (41), a movable element (42) and a pivot (43) which pivotably connects the immovable element (41) to the movable element (42), said pivot (43) extending along a rotational axis (AX), said rotational axis (AX) being offset with respect to said joint (20) in the transverse direction by being located in a plane (P3) orthogonal to the second immovable surface (19) and not passing through the joint (20), said rotational axis (AX) being upwardly offset with respect to said joint (20) by not being contained in said opening (11), said immovable element (41) comprising a surface referred to as the "immovable bearing surface (44)" which is rigidly connected to the supporting wall (10), said immovable bearing surface (44) facing the second immovable surface (19) and being contained in a plane referred to as the "immovable plane (P1)", the movable element (42) comprising a surface referred to as the "movable bearing surface (45)" which is rigidly connected to the movable wall (30), said movable bearing surface (45) facing the second movable surface (35) and being contained in a plane referred to as the "movable plane (P2)",
- said transparent structure (1) comprises at least one catch (50) for securing said movable wall (30) in the closed position (POSF) on request,
**characterised in that** the movable plane (P2) and the immovable plane (P1) are separated by an angle of between 0 and 180 degrees exclusive in said closed position (POSF).

2. Transparent structure according to claim 1, **characterised in that** said opening (11) is contained in the supporting wall (10).

3. Transparent structure according to either claim 1 or claim 2, **characterised in that** at least one of said supporting wall (10) and said movable wall (30) is made of poly(methyl methacrylate).

4. Transparent structure according to any of claims 1 to 3, **characterised in that** said supporting wall (10) comprises a main wall (12) and a reinforcement (16), the reinforcement (16) being attached to the main wall (12) around said opening (11), said immovable element (41) being attached to the reinforcement (16).

5. Transparent structure according to claim 4, **characterised in that** at least one shim (60) is positioned between said immovable bearing surface (44) and said reinforcement (16).

6. Transparent structure according to either claim 4 or claim 5, **characterised in that** a block of shimming material (65) is arranged between said movable bearing surface (45) and said movable wall (30).

7. Transparent structure according to any of claims 1 to 6, **characterised in that** said supporting wall (10) comprises a peripheral boundary (14) which surrounds said opening (11) and a peripheral falling edge (15) which projects transversely from said peripheral boundary and is flush with said first immovable surface (18), said peripheral falling edge (15) defining in elevation a groove (17) in which said joint (20) is arranged, said peripheral boundary (14) defining said groove (17) in the transverse direction, said movable wall (30) comprising an outer falling edge (33) on the periphery thereof, said outer falling edge (33) having a chamfer (36) with respect to said joint (20) and said groove (17), said chamfer (36) being in contact with said joint (20) in said closed position (POSF).

8. Transparent structure according to claim 7, **characterised in that** said joint (20) is attached to the peripheral falling edge (15).

9. Transparent structure according to either claim 7 or claim 8, **characterised in that** a transverse gap (23) separates said joint (20) from the peripheral boundary (14) when the movable wall (30) is in an open position (POSO).

10. Transparent structure according to any of claims 1 to 9, **characterised in that** said joint (20) is a flange joint (21).

11. Transparent structure according to any of claims 1 to 10, **characterised in that** said joint (20) is covered in a protective resin (22).

12. Transparent structure according to any of claims 1 to 11, **characterised in that** said catch (50) comprises a pin (51) attached to the supporting wall (10), said pin (51) projecting from said supporting wall (10) in an extension direction, said catch (50) comprising a lever (52) which is rotatable about said pin (51), said lever (52) extending transversally in a direction perpendicular to the extension direction, said catch (50) comprising a strip shim (53) which is in contact with the lever.

13. Transparent structure according to any of claims 1 to 12, **characterised in that** said movable wall (30) is contained in said opening (11) in the closed position (POSF), said first movable surface (34) not being flush with the first immovable surface (18) by being set back in said opening (11).

14. Transparent structure according to any of claims 1 to 13, **characterised in that** said supporting wall (10) is attached to a window frame (2).

15. Transparent structure according to any of claims 1 to 14, **characterised in that** said opening (11) being delimited by an interior rim (13) along a closed line having a plurality of segments (131, 132), said at least one hinge mechanism comprising a plurality of hinge mechanisms, said hinge mechanisms (40) are attached to the same segment (131).

16. Transparent structure according to claim 15, **characterised in that** each segment (132) which is free of said hinge mechanisms (40) engages with at least one catch (50).

17. Aircraft (100) provided with a partition (110) which defines a window, **characterised in that** said aircraft (100) comprises a transparent structure (1) according to any of claims 1 to 16 for sealing said window.

18. Aircraft according to claim 17, **characterised in that** said second movable surface (35) in the closed position and the second immovable surface (19) face an interior space (INT) of said aircraft (10).
